# FASCICULE DE BREVET EUROPEEN

(11) **EP 3 190 797 B1**
(45) Date de publication et mention de la délivrance du brevet: **18.12.2019**
(21) Numéro de dépôt: 17150459.0
(22) Date de dépôt: 05.01.2017
(51) Int. Cl.: H04N 21/431, H04N 21/482, H04N 5/445

(54) **PROCÉDÉ DE GÉNÉRATION D'UNE INTERFACE GRAPHIQUE REPRÉSENTANT UN GUIDE DES PROGRAMMES**
VERFAHREN ZUR ERZEUGUNG EINER GRAFISCHEN SCHNITTSTELLE, DIE ALS PROGRAMMFÜHRER FUNGIERT
METHOD FOR GENERATING A GRAPHICAL INTERFACE REPRESENTING A PROGRAM GUIDE

(30) Priorité: 06.01.2016 FR 1650088
(43) Date de publication de la demande: 12.07.2017
(73) Titulaire: WIZTIVI, 44470 Carquefou (FR)
(72) Inventeur: MUR, Guillaume, 44000 Nantes (FR)
(74) Mandataire: Loyer & Abello

(56) Documents cités:
- EP-A1- 2 343 883
- WO-A1-2009/055273
- FR-A1- 2 980 069
- JP-A- H1 198 431
- US-A1- 2004 128 683
- US-A1- 2005 108 752
- US-A1- 2009 165 046
- US-A1- 2009 210 910
- US-A1- 2014 259 072
- US-B1- 6 405 371

## Description

### Domaine technique

L'invention se rapporte au domaine de la génération d'interface graphique et, plus particulièrement au domaine de la génération d'interface graphique représentant un guide des programmes.

### Arrière-plan technologique

Il existe aujourd'hui de nombreux supports de diffusion de contenus média ainsi qu'une pluralité de chaînes de diffusion de ces contenus. Ainsi, de nombreuses chaînes de télévision ou encore de stations de radio diffusent une grande variété de programmes. Afin de permettre aux utilisateurs de connaître à l'avance les programmes qu'ils pourront suivre, chaque chaîne de diffusion fournit une liste de programmes qu'il prévoit diffuser au cours d'une certaine période. Les utilisateurs peuvent ainsi consulter les programmes de chaque acteur de diffusion afin de décider le contenu qu'ils souhaitent regarder et/ou écouter durant leur temps libre.

Afin de consulter simultanément les programmes d'une pluralité de chaîne de diffusion, il existe des guides électroniques des programmes (connus sous l'acronyme anglais EPG) sous forme de tableaux dont un premier axe représente une échelle de temps et un second axe représente les différentes chaînes de diffusion. Un tel tableau représente par exemple les programmes diffusés par une pluralité de chaînes de télévision durant une portion de l'après-midi ou encore durant la soirée. Ainsi, le guide des programmes affiche des informations sur les programmes qui seront diffusés à une heure donnée sur une chaîne de diffusion donnée. Cependant, chaque programme occupe le long de l'axe représentatif de l'échelle de temps un espace proportionnel à sa durée. Ainsi, un programme durant 3h occupera un espace important le long de l'axe représentatif de l'échelle de temps. Inversement, un programme ne durant qu'un quart d'heure occupera très peu d'espace le long de l'axe représentatif de l'échelle de temps.

Cette représentation assujettit l'espace disponible pour l'affichage d'informations sur un programme à la durée de ce programme. Ainsi, un programme durant trois heures occupe généralement plus d'espace d'affichage que nécessaire pour afficher les informations sur ledit programme. Inversement, un programme court durant par exemple entre 5 et 15 minutes ne dispose que d'un très petit espace d'affichage ne permettant généralement pas de visualiser de manière simple et rapide toutes les informations relatives à ce programme.

Une solution pour permettre l'affichage de toutes les informations disponibles pour chaque programme serait de prévoir un guide des programmes dont l'unité le long de l'axe représentatif de l'échelle de temps présente une taille minimale permettant l'affichage de l'ensemble des informations relatives à un programme. Cependant, une telle échelle de temps imposerait un affichage démesuré pour les programmes de longue durée.

Le document EP2343883A1 décrit un procédé selon le préambule de la revendication 1 employant une grille de programme sous la forme d'une matrice dont chaque cellule permet l'affichage d'une vignette correspondant à un programme diffusé respectif. Chaque colonne de cette matrice correspond à une source telle qu'une chaîne de télévision. Les lignes de la matrice définissent un axe temporel de diffusion desdits programmes. Plus particulièrement, une ligne médiane de cette matrice est fixe et correspond à un instant de référence. La ou les lignes de la matrice qui précèdent la ligne médiane fixe affichent, pour chaque colonne, le ou les programmes qui précèdent dans le temps le programme diffusé à l'instant de référence dans ladite colonne. Inversement, la ou les lignes de la matrice qui suivent la ligne médiane fixe affichent, pour chaque colonne, le ou les programmes qui succèdent dans le temps le programme diffusé à l'instant de référence dans ladite colonne.

Afin de faciliter la lecture de la grille de programmes, EP2343883A1 prévoit que chaque cellule de la matrice présente les mêmes dimensions indépendamment de la durée du programme associé aux vignettes affichées dans les cellules. Typiquement, toutes les cellules de la matrice présentent les mêmes dimensions pour l'affichage des vignettes.

EP2343883A1 décrit deux modes de navigation dans la grille de programme.

Selon un premier mode de réalisation, la navigation se fait en définissant directement l'instant de référence définissant les vignettes à afficher dans la ligne médiane fixe. Dans ce premier mode de navigation, l'instant de référence est défini par défaut à l'instant courant.

Dans un deuxième mode de navigation, la navigation se fait en déplaçant un curseur illustrant graphiquement la vignette sélectionnée. Dans ce deuxième mode de réalisation, l'instant de référence est modifié pour chaque vignette sélectionnée comme étant l'instant de début de diffusion de ladite vignette sélectionnée.

Dès lors que l'instant de référence est modifié, l'ensemble des vignettes affichées sur la ligne médiane fixe sont mises à jour pour afficher sur ladite ligne médiane fixe les vignettes correspondant à des programmes en cours de diffusion à l'instant de référence. Les autres lignes de la matrice sont également mises à jour pour afficher les vignettes correspondant aux programmes précédents ou suivants les programmes correspondant aux vignettes situées sur la ligne médiane fixe.

Ainsi, dans EP2343883A1, l'utilisateur peut utiliser le premier mode de navigation s"il souhaite connaître les programmes en cours de diffusion à l'instant courant. Il peut utiliser le deuxième mode de navigation s'il souhaite connaître les programmes en cours de diffusion au début de diffusion d'un programme sélectionné par l'utilisateur mais il n'a alors pas accès à la liste des programmes en cours de diffusion à l'instant courant.

### Résumé

Une idée à la base de l'invention est de fournir un guide des programmes permettant une bonne lisibilité des informations relatives aux programmes quelle que soit la durée du programme.

Selon un mode de réalisation, l'invention fournit un procédé de génération d'une interface graphique représentant un guide des programmes comportant :
- Générer une interface graphique comportant une pluralité de séries de cartes de programmes, chaque série de cartes de programmes étant associée à une chaîne de diffusion respective, chaque carte de programme représentant un programme à diffuser par ladite chaîne de diffusion associée, chaque carte de programme étant associée à une pluralité d'attributs de programme incluant un instant de début de programme et un descripteur de programme, chaque carte de programme comportant une zone d'information dans laquelle le descripteur de programme est affiché, les cartes de programme d'une série étant positionnées par ordre chronologique le long d'un premier axe de l'interface graphique, la pluralité de séries étant positionné le long d'un deuxième axe de l'interface graphique, les cartes de programmes desdites séries étant positionnées sous la forme d'une pluralité d'alignements parallèles au deuxième axe, les cartes de programmes qui appartiennent à un même alignement ayant une dimension égale le long du premier axe,
- Sélectionner une carte de programme en tant que carte active,
- Fixer un paramètre d'instant de diffusion cible égal à l'instant de début de programme attribué à la carte active,
- Positionner dans l'alignement auquel appartient la carte active les cartes de programmes qui, d'une part, appartiennent à des séries de cartes de programmes autres que la série à laquelle appartient la carte active et, d'autre part, qui représentent des programmes en cours de diffusion à l'instant représenté par le paramètre d'instant de diffusion cible, de sorte que l'interface graphique générée comporte lesdites cartes de programmes positionnées de cette manière.

Un tel procédé permet de générer une interface graphique dans laquelle l'ensemble des programmes diffusés à un instant donné sont consultables de façon lisible et simple. Un tel procédé permet en outre de synchroniser l'affichage des informations affichées lorsque l'utilisateur navigue dans le guide des programmes. Ce procédé permet de générer une interface graphique présentant une taille d'affichage permettant l'affichage des informations relatives à un programme cible consulté par l'utilisateur mais également pour tous les programmes débutant ou diffusés en même temps que ce programme cible. L'utilisateur peut ainsi visualiser de manière simple, lisible et immédiate les programmes d'une pluralité de chaînes de diffusion diffusés à un horaire de diffusion cible.

Selon d'autres modes de réalisation avantageux, un tel procédé de génération d'interface graphique peut présenter une ou plusieurs des caractéristiques suivantes.

Selon un mode de réalisation, le procédé de génération d'une interface graphique comporte en outre
∘ Recevoir une commande de navigation présentant une direction de navigation le long du premier axe dans l'interface graphique,
∘ Modifier la sélection de la carte active pour sélectionner en tant que carte active une carte de programme positionnée dans la direction de navigation par rapport à la carte de programme précédemment sélectionnée.

Selon un mode de réalisation, le fonctionnement de l'interface graphique est similaire en réponse à une commande de navigation le long du deuxième axe dans l'interface graphique, c'est-à-dire un changement de chaîne de diffusion. Toutefois, il est préférable que le paramètre d'instant de diffusion cible ne soit jamais modifié en réponse à une commande de navigation le long du deuxième axe dans l'interface graphique et soit modifié seulement en réponse à une commande de navigation le long du premier axe dans l'interface graphique.

Selon un mode de réalisation, l'étape de modification de la sélection de la carte active est exécutée en réponse à l'expiration d'un compteur de temps, le procédé comportant en outre
∘ Réinitialiser le compteur de temps à une durée positive déterminée à chaque réception de commande de navigation.

Selon un mode de réalisation, le procédé comporte en outre :
- Recevoir une commande d'accès direct désignant une carte de programme dans l'interface graphique,
- Modifier la sélection de la carte active pour sélectionner en tant que carte active la carte de programme désignée par la commande d'accès direct.

Selon un mode de réalisation, l'interface graphique comporte en outre un pointeur de la carte active positionné sur la carte active dans l'interface graphique.

Selon un mode de réalisation, le procédé de génération d'une interface graphique comporte en outre
∘ déterminer un instant présent
∘ comparer l'instant présent à l'instant de début de programme attribué à la carte active,
et l'élape de fixer le paramètre d'instant de diffusion cible comporte en outre fixer le paramètre d'instant de diffusion cible égal à l'instant présent en réponse à la détection que l'instant présent est postérieur à l'instant de début de programme attribué à la carte active, et égal à l'instant de début de programme attribué à la carte active en réponse à la détection que l'instant présent est antérieur à l'instant de début de programme attribué à la carte active.

Selon un mode de réalisation, les cartes de programmes qui appartiennent à une même série ont une dimension égale le long du second axe. Selon un mode de réalisation, toutes les cartes de programmes ont une dimension égale le long du second axe.

Selon un mode de réalisation, la carte active et les cartes de programme positionnées dans l'alignement auquel appartient la carte active présentent une dimension le long du premier axe plus grande que les autres cartes de programme.

Selon un mode de réalisation, la pluralité d'attributs de programme de chaque carte de programme inclut un instant de fin de programme, et dans lequel l'étape de positionner dans l'alignement auquel appartient la carte active les cartes de programmes des séries de cartes de programmes autres que la série à laquelle appartient la carte active comporte, pour chaque série de cartes de programmes autre que la série à laquelle appartient la carte active, une étape de sélection d'une carte de programme présentant un instant de début de programme antérieur à l'instant de diffusion cible et un instant de fin de programme postérieur à l'instant de diffusion cible. En d'autres termes, on détermine qu'une carte de programme représente un programme en cours de diffusion à l'instant représenté par le paramètre d'instant de diffusion cible en détectant que (i) l'instant de début de programme de cette carte de programme est antérieur à l'instant de diffusion cible et (ii) l'instant de fin de programme de cette carte de programme est postérieur à l'instant de diffusion cible.

Selon un mode de réalisation, la pluralité d'attributs de programme de chaque carte de programme inclut une durée de programme, l'étape de positionner dans l'alignement auquel appartient la carte active les cartes de programmes des séries de cartes de programmes autres que la série à laquelle appartient la carte active comporte, pour chaque série de cartes de programmes autre que la série à laquelle appartient la carte active, une étape de sélection d'une carte de programme présentant un instant de début de programme antérieur à l'instant de diffusion cible et une durée de programme supérieure à un temps restant entre l'instant de début de diffusion de ladite carte de programme et l'instant de diffusion cible. En d'autres termes, on détermine qu'une carte de programme représente un programme en cours de diffusion à l'instant représenté par le paramètre d'instant de diffusion cible en détectant que (i) l'instant de début de programme de cette carte de programme est antérieur à l'instant de diffusion cible et (ii) que la durée de programme de cette carte de programme est plus longue que l'intervalle de temps entre l'instant de début de diffusion de cette carte de programme et l'instant de diffusion cible.

Selon un mode de réalisation, la pluralité de séries de cartes de programmes est positionnée le long d'un deuxième axe de l'interface graphique de manière cyclique.

Une telle interface graphique peut être générée avec un nombre quelconque, pair ou impair, de cartes de programmes, un nombre quelconque, pair ou impair, de séries de cartes de programmes et un nombre quelconque, pair ou impair, d'alignements de cartes de programmes. En particulier, le nombre de lignes affichées et le nombre de colonnes affichées peuvent être déterminés en fonction de respectivement la hauteur et la largeur de l'écran. La série contenant la carte active est ou n'est pas centrée. Si les séries de cartes de programmes sont représentées sous la forme de colonnes, il est préférable d'afficher au moins une colonne à droite et une colonne à gauche de la série contenant la carte active. Si les séries de cartes de programmes sont représentées sous la forme de lignes, il est préférable d'afficher au moins une ligne au-dessus et une ligne en-dessous de la série contenant la carte active.

Selon un mode de réalisation particulier, l'interface graphique comporte un nombre impair de séries de cartes de programmes, la série à laquelle appartient la carte active étant centrée parmi les séries de cartes de programme de l'interface graphique.

Selon un mode de réalisation, le procédé de génération d'une interface graphique comporte en outre recevoir une commande d'instant de diffusion désignant un instant prédéterminé, modifier l'instant de diffusion cible pour définir en tant qu'instant de diffusion cible l'instant de début de diffusion de la carte de programme d'une part appartenant à la série incluant la carte active et, d'autre part, représentant un programme en cours de diffusion à l'instant prédéterminé désigné par la commande d'instant de diffusion. Une telle commande d'instant de diffusion peut être générée de différentes manières. Dans un mode de réalisation, un bouton présent sur la télécommande ou une icône présente sur l'écran, est activable pour générer la commande d'instant de diffusion, par exemple un bouton « MAINTENANT » qui génère une commande d'instant de diffusion désignant l'heure horloge ou un bouton « CE SOIR » qui génère une commande d'instant de diffusion désignant une heure prédéfinie en début de soirée, par exemple 20h30.

L'invention fournit également un dispositif de génération d'une interface graphique comportant un module de commande configuré pour
- Générer une interface graphique comportant une pluralité de séries de cartes de programmes, chaque série de cartes de programmes étant associée à une chaîne de diffusion respective, chaque carte de programme représentant un programme à diffuser par ladite chaîne de diffusion associée, chaque carte de programme étant associée à une pluralité d'attributs de programme incluant un instant de début de programme et un descripteur de programme, chaque carte de programme comportant une zone d'information dans laquelle le descripteur de programme est affiché, les cartes de programme d'une série étant positionnées par ordre chronologique le long d'un premier axe de l'interface graphique, la pluralité de séries étant positionné le long d'un deuxième axe de l'interface graphique, les cartes de programmes desdites séries étant positionnées sous la forme d'une pluralité d'alignements parallèles au deuxième axe, les cartes de programmes qui appartiennent à un même alignement ayant une dimension égale le long du premier axe,
- Sélectionner une carte de programme en tant que carte active,
- Fixer un paramètre d'instant de diffusion cible égal à l'instant de début de programme attribué à la carte active,
- Positionner dans l'alignement auquel appartient la carte active les cartes de programmes qui, d'une part, appartiennent à des séries de cartes de programmes autres que la série à laquelle appartient la carte active et, d'autre part, qui représentent des programmes en cours de diffusion à l'instant représenté par le paramètre d'instant de diffusion cible, de sorte que l'interface graphique générée comporte lesdites cartes de programmes positionnées de cette manière.

Certains aspects de l'invention partent de l'idée de fournir un guide des programmes lisible quelle que soit la durée des programmes. Certains aspects de l'invention partent de l'idée de fournir une interface graphique permettant l'affichage d'un programme cible et d'une pluralité de programmes parallèles synchronisés avec le programme cible. Certains aspects de l'invention partent de l'idée de mettre à jour en continu l'interface graphique afin d'afficher les programmes en cours de diffusion. Certains aspects de l'invention partent de l'idée de générer une interface graphique permettant de naviguer dans un guide des programmes afin de cibler un programme et synchroniser l'affichage pour afficher les programmes débutant ou en cours de diffusion à l'instant de diffusion du programme cible. Certains aspects de l'invention partent de l'idée de fournir un guide des programmes dans lequel les éléments graphiques associés aux différents programmes comportent une taille d'affichage indépendante de la durée des programmes.

### Brève description des figures

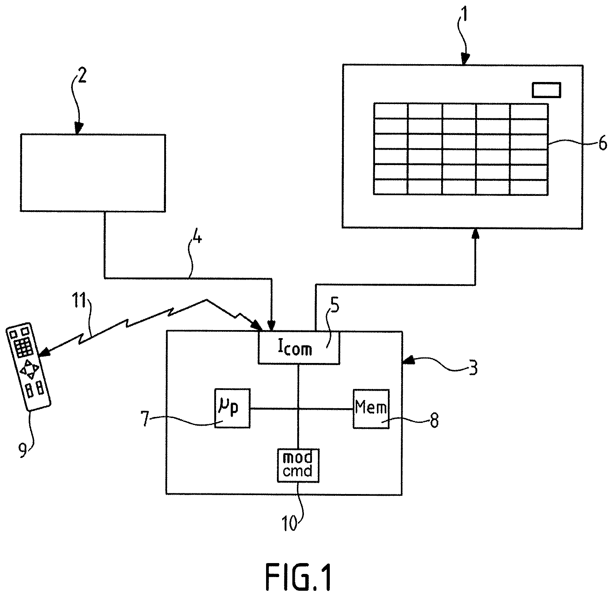

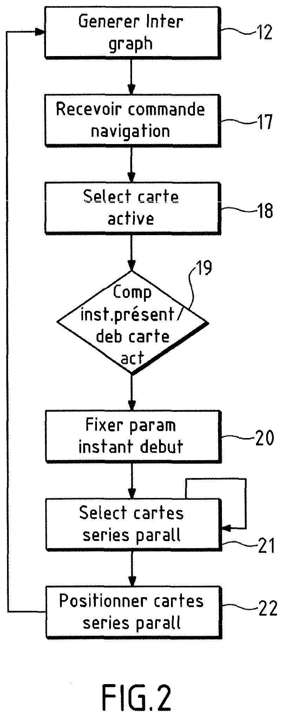

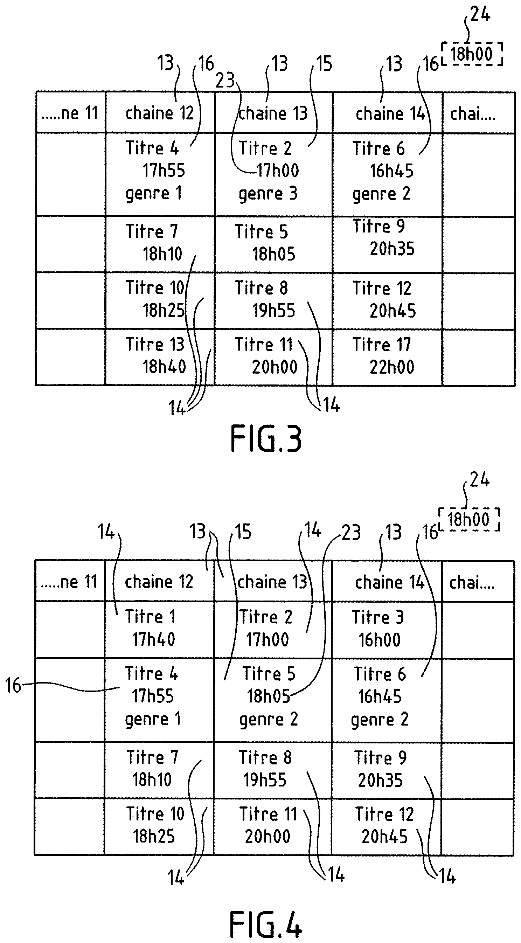

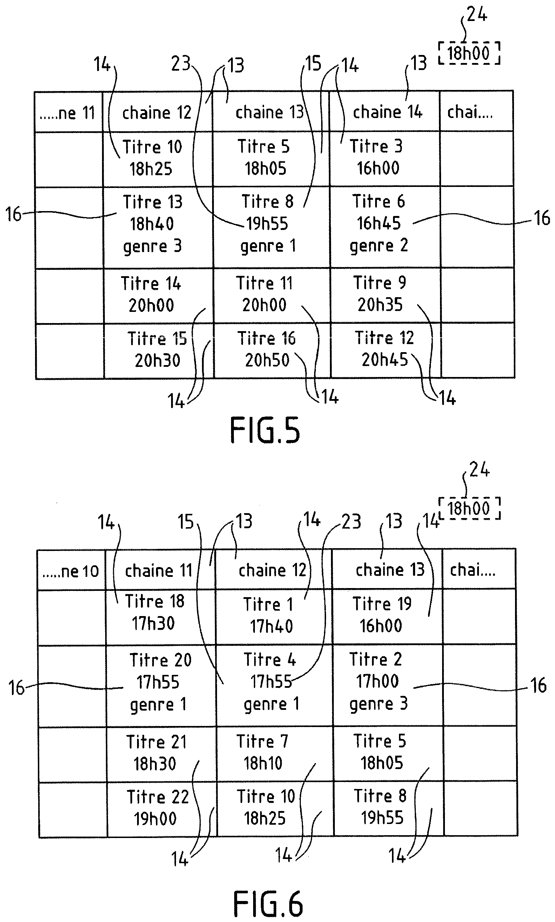

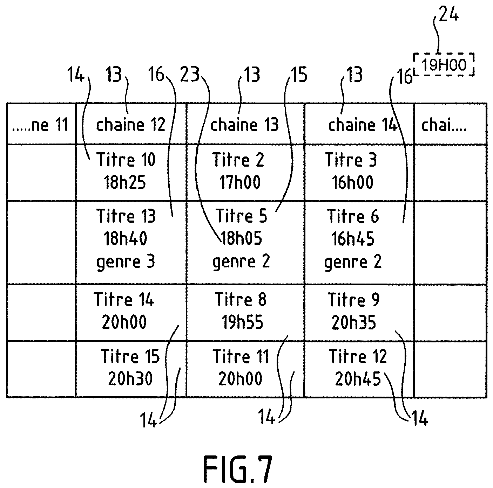

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
- **La** **figure 1** représente schématiquement un système d'affichage de guide des programmes ;
- **La** **figure 2** représente un organigramme de fonctionnement d'un procédé de génération d'une interface graphique d'affichage de guide des programmes ;
- **La** **figure 3** représente un affichage du guide des programmes selon le procédé de la figure 2 et dont le curseur illustrant le programme cible est associé à un programme en cours de diffusion ;
- **La** **figure 4** représente l'affichage du guide des programmes de la figure 3 dans lequel le curseur illustrant le programme cible a été déplacé pour cibler le prochain programme diffusé sur la même chaîne de diffusion ;
- **La** **figure 5** représente l'affichage du guide des programmes de la figure 4 dans lequel le curseur illustrant le programme cible a été déplacé pour cibler le prochain programme diffusé sur la même chaîne de diffusion ;
- **La** **figure 6** représente l'affichage du guide des programmes de la figure 4 dans lequel le curseur illustrant le programme cible a été déplacé pour cibler le programme diffusé sur une autre chaîne ;
- **La** **figure 7** représente l'affichage du guide des programmes de la figure 4 à une heure postérieure à l'heure d'affichage de la figure 4.

### Description détaillée de modes de réalisation

La description ci-après est réalisée à titre illustratif dans le cadre d'un guide des programmes pour télévision. Cependant, l'interface graphique générée selon le procédé décrit ci-dessous peut être affichée sur des dispositifs d'affichage appartenant à d'autres appareils que des télévisions, par exemple smartphones, tablettes, PC, etc. De plus, le procédé décrit ci-dessous peut être appliqué à de nombreux domaines comme par exemple dans le cadre d'un guide des programmes de diffusion de station de radio, de programmes multimédia sur internet ou autre.

En référence à la figure 1, un téléviseur 1, ou tout autre dispositif d'affichage, est relié à un serveur distant 2 de distribution de télévision numérique par l'intermédiaire d'un boîtier d'accès 3 et d'un réseau d'accès 4. Le boîtier d'accès 3 est par exemple placé à proximité du téléviseur 1 voire mécaniquement intégré avec celui-ci. Le réseau d'accès 4 peut être un réseau radio, filaire à haut débit, par exemple un réseau de cuivre, câbles coaxiaux ou de fibres optiques.

Une fonction du boîtier d'accès 3 est de permettre la réception de signaux de télévision depuis le serveur distant 2. Une autre fonction du boîtier d'accès 3 est de fournir une interface graphique d'affichage d'un guide des programmes 6. Une telle interface graphique du guide des programmes est générée par le boîtier d'accès 3 à partir d'informations de programmation de diffusions transmises depuis le serveur distant 2 via le réseau d'accès 4. Le boîtier d'accès 3 comporte une interface de communication 5 connectée au réseau d'accès 4 pour recevoir les différentes informations depuis le serveur distant 2. Comme illustré sur la figure 1, l'interface de communication 5 est également connectée au téléviseur 1 afin de transmettre l'interface graphique 6 générée par le boîtier d'accès 3 ainsi que les contenus correspondant aux programmes à diffuser. La connexion entre le boîtier d'accès 3 et le téléviseur 1 est réalisée de toute manière adaptée, par exemple à l'aide d'un câble HDMI, d'un câble péritel, d'une connexion sans fil, d'un câblage réseau ou autre.

Afin de traiter les signaux reçus depuis le serveur distant 2, le boîtier d'accès 3 comporte un microprocesseur 7 et une mémoire interne 8. Le boîtier d'accès 3 peut aussi comporter d'autres modules physiques ou fonctionnels pour offrir des fonctionnalités plus riches. De tels modules sont par exemple des modules de lecture de dispositif de stockage externe (DVD, carte SD, disque dur, etc.), un module démultiplexeur, un module de décodage de signal, des connectique supplémentaire ou encore des modules de génération d'interface graphique pour gérer le boîtier d'accès et ses différentes fonctionnalités. En particulier, le boîtier d'accès 3 comporte un module de commande 10 configuré pour générer l'interface graphique du guide des programmes 6 et gérer la navigation dans l'interface graphique 6 du guide des programmes.

Le boîtier d'accès 3 est piloté par un utilisateur à l'aide d'une interface homme-machine adaptée, par exemple au moyen d'une télécommande 9, d'un clavier, d'une souris et/ou d'une interface de commande vocale. A titre purement illustratif, on prend l'exemple de la télécommande 9 dans la description qui suit.

Cette télécommande 9 est reliée à l'interface de communication 5 du boîtier d'accès 3, par exemple via des signaux radio ou infrarouges 11. La télécommande 9 permet par exemple de contrôler et/ou d'activer les différentes fonctions du boîtier d'accès 3, à savoir la sélection de chaîne, la configuration de l'affichage, la navigation dans un programme enregistré etc. La télécommande 9 permet également de sélectionner des éléments graphiques de l'interface graphique 6 et de naviguer dans le guide des programmes comme cela sera décrit ci-après en regard des figures 3 à 7.

La figure 2 est un organigramme qui représente la génération de l'interface graphique 6 d'affichage du guide des programmes.

L'accès à l'interface graphique 6 du guide des programmes se fait par tout moyen adapté, par exemple via une touche dédiée de la télécommande 9 ou encore par navigation, sélection et activation d'une icône dédiée dans une interface graphique de gestion du boîtier d'accès 3.

Lorsque le boîtier d'accès 3 reçoit une instruction d'affichage de l'interface graphique 6, il génère une interface graphique initiale telle qu'illustrée sur la figure 3 (étape 12). Cette interface graphique initiale présente un affichage par défaut, par exemple relatif à des programmes en cours de diffusion pour les premières chaines de diffusions d'une série de chaîne de diffusion transmises par le serveur distant 2.

L'utilisateur peut sortir de l'interface graphique 6 par tout moyen adapté, par exemple à l'aide d'un bouton dédié de la télécommande 9. Un tel bouton dédié de la télécommande est par exemple un bouton « menu » permettant de revenir à une interface graphique de gestion du boîtier d'accès 3 ou encore un bouton « retour » permettant de retourner à la dernière interface graphique générée par le boîtier d'accès 3 avant de générer l'interface graphique 6 de guide des programmes. Dans un autre mode de réalisation, l'interface graphique 6 de guide des programmes comporte un élément graphique indépendant (non illustré) permettant de retourner au menu général de gestion du boîtier d'accès 3.

Comme illustré en regard des figures 3 à 7, l'interface graphique 6 de guide des programmes comporte un tableau d'éléments graphiques. L'axe des abscisses de ce tableau représente les différentes chaînes de diffusion de la série de chaînes de diffusion. Ainsi, la première ligne de chaque colonne du tableau comporte une case 13 illustrant un descriptif pour une chaîne de diffusion respective de la série de chaîne de diffusion. L'axe des ordonnées de ce tableau représente un axe temporel. Pour chaque colonne représentative d'une chaine de diffusion, le tableau comporte une pluralité d'éléments graphiques 14 situés le long de l'axe temporel. Les programmes de chaque chaine de diffusion sont associés aux éléments graphique 14 par ordre chronologique de diffusion à partir du premier élément graphique 14 situé directement sous la case 13 descriptive de ladite chaîne de diffusion Plus particulièrement, chaque élément graphique 14 est associé à une carte de programme de la chaîne de diffusion contenant des informations sur un programme à diffuser. Ces informations sont, par exemple, l'heure de début de diffusion du programme à diffuser, son titre ou encore son genre. L'interface graphique 6 comporte en outre un élément d'identification d'une carte active. L'identification de la carte active peut par exemple être réalisé à en affichant en surbrillance l'élément graphique 14 correspondant à la carte active, en affichant une bordure élargie pour l'élément graphique 14 correspondant à la carte active ou tout autre moyen adapté. Dans la suite de la description et sur les figures 3 à 7, la carte active est associée à un élément graphique en surbrillance 15. Les éléments graphiques 14 situés sur la même ligne du guide des programmes que l'élément graphique en surbrillance 15 sont appelés éléments graphiques parallèles 16.

L'élément graphique en surbrillance 15 peut être prédéterminé lors de la génération de l'interface graphique initiale (étape 12). Cet élément graphique en surbrillance 15 peut être par exemple le programme en cours de diffusion à l'instant présent sur la dernière chaîne consultée.

L'utilisateur peut naviguer dans le guide des programmes à l'aide de touches de la télécommande 9, par exemple en utilisant des touches illustrées à l'aide de flèches directionnelles de la télécommande 9, en tapant directement une heure de diffusion souhaitée ou encore un numéro ou le nom de la chaîne cible sur le clavier de la télécommande. Selon l'interface homme-machine installée sur le boîtier d'accès 3, l'utilisateur pourrait aussi entrer les paramètres précédents avec l'aide de la voix ou de commandes gestuelles. La navigation dans le guide des programmes se fait simplement en modifiant la carte de programme associé à l'élément graphique en surbrillance 15 en fonction d'une commande de navigation générée par l'utilisateur. La navigation dans le guide des programmes associe par exemple à l'élément graphique en surbrillance 15 la carte de programme suivante dans l'ordre chronologique de la chaîne de diffusion comportant la carte active ou encore la carte de programme débutant ou en cours de diffusion à l'instant de diffusion de la carte active.

Lorsque le module de commande 10 reçoit une commande de navigation dans le guide des programmes (étape 17), il modifie la sélection de la carte active (étape 18) pour sélectionner en tant que carte active la carte correspondant à la commande de navigation. Dès lors, le procédé de génération d'interface graphique de guide des programmes compare l'heure de début de diffusion de la carte active sélectionnée à l'heure actuelle (étape 19). Le procédé définit alors un paramètre d'heure de diffusion cible (étape 20) en fonction de cette comparaison. Si l'heure de début de diffusion de la carte active est postérieure à l'heure actuelle, i.e. la carte active correspond à un programme futur, un paramètre d'heure de diffusion cible est défini comme étant égal à l'heure de début de diffusion de la carte active sélectionnée. Si au contraire l'heure de début de diffusion de la carte active sélectionnée est antérieure à l'heure actuelle, i.e. la carte active sélectionnée correspond à un programme en cours de diffusion, le paramètre d'heure de diffusion cible est défini comme étant égal à l'heure actuelle.

Dans un mode de réalisation non illustré, l'étape de modification de la carte active sélectionnée est assujettie à une condition temporelle. Dans ce mode de réalisation non illustré, le module de commande 10 contrôle en continu le temps écoulé entre la réception de deux commandes de navigation successives. Pour cela, le module de commande 10 génère un compteur temporel réinitialisé à la réception de chaque nouvelle commande de navigation. Le module de commande 10 n'exécute l'étape de modification de la carte active sélectionnée que lorsqu'il détecte que le compteur dépasse un délai prédéterminé, par exemple de 3 secondes. Si le module de commande 10 reçoit une nouvelle commande de navigation avant que le compteur ne dépasse le délai prédéterminé, alors la carte active n'est pas modifiée et le compteur est réinitialisé. Ce mode de réalisation permet de ne modifier la carte active que si l'utilisateur s'attarde sur un programme au-delà d'un certain temps, évitant ainsi de modifier la carte active lorsque l'utilisateur envoie une série de commandes de navigation afin de se déplacer d'un grand nombre de cartes de programme dans le guide des programmes.

Dès lors que la carte active a été modifiée et que le paramètre d'heure de diffusion cible a été défini, le module de commande 10 sélectionne, pour chaque chaîne affichée ne comportant pas la carte active, une carte de programme parallèle correspondant à un programme débutant ou en cours de diffusion à l'heure de diffusion cible (étape 21). Une fois l'ensemble des cartes de programme parallèles sélectionnées, alors ces cartes parallèles sont associées aux éléments graphiques parallèles 16 positionnés dans le tableau de guide des programmes sur une même ligne que l'élément graphique en surbrillance 15 (étape 22). Une nouvelle interface graphique comportant sur un même alignement l'élément graphique en surbrillance 15 associé à la carte active et les éléments graphique parallèles 16 associés aux cartes parallèles est alors générée pour être affichée sur le téléviseur 1 (étape 12).

La figure 3 illustre l'interface graphique générée lors de l'affichage initial du guide des programmes.

Dans l'exemple représenté, l'interface graphique 6 comporte trois colonnes entières et deux colonnes partielles sur chaque côté. Les colonnes sont associées à des chaînes de diffusion consécutives dans la série de chaine de diffusion. Chaque colonne affiche idéalement quatre lignes d'éléments graphiques 14 associés à des cartes de programme pour chaque chaîne de diffusion.

Lors de la génération de l'interface graphique initiale, la chaîne de diffusion comportant la carte active par défaut est affichée dans la colonne centrale. La carte active par défaut est par exemple une carte de programme de la dernière chaîne de diffusion consultée ou regardée. En outre, la carte active par défaut peut correspondre au programme en cours de diffusion, comme le montre l'heure de début de diffusion 23 indiquée dans l'élément graphique en surbrillance 15 et l'heure actuelle 24 intégrée à l'interface graphique générée. Du fait que l'élément graphique en surbrillance 15 est associé à une carte de programme correspondant à un programme en cours de diffusion, l'élément graphique en surbrillance 15 est situé sur la ligne située juste en dessous de la ligne des chaînes de diffusion, comme illustré sur la figure 3. Typiquement, l'élément graphique en surbrillance 15 et les éléments graphiques parallèles 16 sont positionnés sur la première ligne située sous la ligne de chaîne de diffusion lorsque la carte active correspond à un programme en cours de diffusion et sur la seconde ligne située sous la ligne de chaîne de diffusion lorsque la carte active correspond à un programme futur. Cette configuration permet à l'utilisateur de visualiser simplement et rapidement si le programme actif est un programme en cours de diffusion ou si c'est un programme à venir.

Dans un mode de réalisation, l'utilisateur ne peut pas se déplacer dans le guide des programmes pour consulter un programme antérieur au programme en cours de diffusion. Dans ce cas, lorsque l'élément graphique en surbrillance 15 est situé sur la première ligne du guide des programmes, l'utilisateur ne peut pas naviguer dans le guide des programmes pour consulter un programme antérieur. En outre, la ligne illustrant les chaînes de diffusion ne peut être sélectionnée.

Dans un mode de réalisation alternatif, la navigation dans les programmes passés est autorisée, notamment pour accéder à des services de télévision de rattrapage.

La taille allouée à chaque carte de programme le long de l'axe des ordonnées, i.e. l'axe temporel, ne dépend avantageusement pas de la durée du programme de la carte de programme. Tous les éléments graphiques 14 alignés sur une même ligne du guide des programmes présentent les mêmes dimensions le long de l'axe temporel. L'élément graphique en surbrillance 15 ainsi que les éléments graphiques parallèles 16 présentent une taille d'affichage le long de l'axe des ordonnées supérieure à la taille des éléments graphiques 14 des autres lignes. Cette taille d'affichage allouée à l'élément graphique en surbrillance 15 le long de l'axe des ordonnées et aux éléments graphiques parallèles 16 permet d'afficher l'ensemble des informations relatives au programme correspondant à la carte active ainsi qu'aux programmes débutant ou diffusés au même moment sur les autres chaînes de diffusion. L'élément graphique en surbrillance 15 et les éléments graphiques parallèles 16 peuvent ainsi afficher une heure de début de diffusion du programme, son titre, son genre, l'âge recommandé du programme, une information relative à un enregistrement programmé ou en cours, une icône illustrative, etc. Lorsque la carte active correspond à un programme en cours de diffusion, l'élément graphique en surbrillance 15 peut éventuellement contenir une barre de progression de la diffusion du programme.

Dans un mode de réalisation non représenté, seules deux lignes sont affichées pour chaque chaîne de diffusion. Ce mode de réalisation offre des avantages ergonomiques pour accéder rapidement à certaines fonctionnalités. Dans un mode de réalisation, les deux lignes correspondent à des moments privilégiés en termes d'usage de visionnage, par exemple « MAINTENANT » et « JUSTE APRES » ou « 1ere partie de soirée » et « 2eme partie de soirée ».

De plus, ce mode de réalisation est particulièrement adapté aux dispositifs d'affichage de petite taille tels que les ordinateur portable, les tablettes tactiles ou encore les téléphones mobiles. Avantageusement, l'interface graphique comporte une icône sélectionnable et activable dédiée permettant de passer d'un mode d'affichage complet comportant quatre lignes de programmes pour chaque chaîne de diffusion à un mode réduit ne comportant que deux lignes de programmes. Le passage d'un mode à l'autre peut également se faire à l'aide d'un bouton dédié de la télécommande 9.

La figure 4 représente l'affichage du guide des programmes de la figure 3 dans lequel le curseur illustrant le programme cible a été déplacé pour cibler le prochain programme diffusé sur la même chaîne de diffusion.

En partant de l'interface graphique illustrée sur la figure 3, si l'utilisateur souhaite afficher les informations relatives au programme suivant dans la liste de programme de la chaîne comportant la carte active, il envoie au module de commande 10 une commande de navigation vers le bas du guide des programmes. En réponse à la réception de cette commande de navigation, le module de commande 10 génère une nouvelle interface graphique dans laquelle l'élément graphique en surbrillance 15 est associé à la carte de programme suivante dans la liste de cartes de programmes de la chaîne de diffusion. Le module de commande 10 modifie alors le paramètre d'heure de diffusion cible pour le faire correspondre à l'heure de début de diffusion de la nouvelle carte active. L'élément graphique en surbrillance 15 reste affiché dans la colonne centrale du guide des programmes. L'élément graphique en surbrillance 15 étant associé à une carte de programme ne correspondant à un programme futur, il est positionné sur la seconde ligne située sous la ligne illustrant les chaînes de diffusion dans le guide des programmes, comme illustré sur la figure 4. L'élément graphique 14 associé à la carte de programme antérieure à la carte active est situé sur la première ligne située sous la ligne de chaîne de de diffusion. Les éléments graphiques parallèles 16 sont associés aux cartes de programmes débutant ou en cours de diffusion à l'heure de début de diffusion de la carte active, c'est-à-dire à l'heure de diffusion cible. Ainsi, dans cette interface graphique, la première ligne située sous la ligne illustrant les chaînes de diffusion comporte des éléments graphiques 12 de taille réduite le long de l'axe des ordonnées par rapport à la taille selon ce même axe des éléments graphiques 15, 16 situés sur la seconde ligne située sous la ligne de chaîne de diffusion.

La figure 5 illustre le cas où l'utilisateur souhaite consulter un programme diffusé postérieurement au programme correspondant à la carte active de la figure 4. De manière analogue à la navigation entre la figure 3 et la figure 4, les éléments graphique parallèles 16 sont associés à des cartes de programmes de chaîne de diffusion parallèles à la chaîne de diffusion comportant la carte active débutant ou diffusé en même temps que le programme correspondant à la carte active. Le programme correspondant à la carte active étant un programme futur, l'élément graphique en surbrillance 15 et les éléments graphiques parallèles 16 sont situés sur la seconde ligne située sous la ligne illustrant les chaînes de diffusion. Lorsque la carte active correspond au dernier programme connu pour une chaîne de diffusion, l'utilisateur ne peut pas se déplacer plus en avant dans le futur. De préférence, un message d'alerte est alors affiché.

La période pour laquelle les programmes sont connus peut varier d'une chaîne à l'autre. Cette période dépend par exemple de la configuration du serveur distant 2. La plage de temps connue est par exemple de maintenant à +7 jours, +14 jours ou + 30 jours. La plage de temps connue peut aussi remonter dans le passé pour donner accès à des services de télévision de rattrapage, par exemple de -7 jours à +14 jours.

La figure 6 illustre un déplacement horizontal dans le guide des programmes depuis l'interface graphique de la figure 3.

En partant de l'interface graphique illustrée sur la figure 3, si l'utilisateur souhaite afficher les informations relatives au programme sur une autre chaîne de diffusion que la chaîne comportant la carte active, il envoie au module de commande 10 une commande de navigation vers la droite ou la gauche du guide des programmes ou saisit un numéro ou nom de chaine. En réponse à la réception de cette commande de navigation, le module de commande 10 génère une nouvelle interface graphique dans laquelle l'élément graphique en surbrillance 15 est associé à la carte de programme débutant ou diffusée en même temps que la carte active précédemment sélectionnée. De préférence, le module de commande 10 ne modifie pas le paramètre d'heure de diffusion cible pour le faire correspondre à l'heure de début de diffusion de la nouvelle carte active lors d'un déplacement le long de l'axe des abscisses dans le guide des programmes. Le paramètre d'heure de diffusion cible n'est modifié qu'en réponse à d'un déplacement le long de l'axe du temps dans le guide des programmes. Lors de la définition de la nouvelle heure de diffusion cible, le module de commande exécute éventuellement la comparaison entre l'heure de début de diffusion de la nouvelle carte active et l'heure actuelle comme expliqué en regard de la figure 3. L'élément graphique en surbrillance 15 reste affiché dans la colonne centrale du guide des programmes. Les éléments graphiques parallèles 16 sont associés aux cartes de programmes débutant ou en cours de diffusion à l'heure de début de diffusion de la carte active nouvellement sélectionnée. Ainsi, dans cette interface graphique, un élément graphique parallèle 16 est associé à la carte active anciennement sélectionnée.

Ainsi, lors d'un déplacement le long de l'axe des abscisses dans le guide des programmes, le paramètre d'heure de diffusion cible n'est préférablement pas modifié. Ce mode de réalisation permet à un utilisateur de sélectionner une heure de diffusion cible en choisissant un programme cible ou en actionnant un bouton d'heure de diffusion cible prédéterminé, puis de naviguer dans le guide des programmes afin de consulter l'ensemble des programmes diffusés sur les différentes chaînes à l'heure de diffusion cible.

Les chaînes de diffusions sont agencées le long de l'axe des abscisses de manière cyclique, c'est-à-dire que lorsque la carte active appartient à la dernière chaîne de diffusion de la série de chaîne de diffusion, la dernière chaîne de diffusion de la série de chaîne de diffusion est encadrée le long de l'axe des abscisses par l'avant dernière chaîne de diffusion de la série de chaîne de diffusion et la première chaîne de diffusion de la série de chaîne de diffusion.

Comme illustré sur la figure 7, le procédé de génération d'interface graphique prévoit une mise à jour régulière du guide des programmes en fonction l'heure actuelle. Cette mise à jour est effectuée à intervalle régulier, lesdits intervalles étant au minimum égaux à la durée prédéterminée de changement de carte active. Cette mise à jour consiste à vérifier, pour chaque élément graphique parallèle 16 que l'heure actuelle est antérieure à l'heure de début de la carte de programme associée à l'élément graphique parallèle 16 vérifié. Si l'heure actuelle est postérieure à l'heure de début de diffusion de la carte associée à l'élément graphique parallèle, alors l'élément graphique parallèle vérifié est associé à la carte de programme suivante de la chaîne de diffusion correspondante. Les autres éléments graphiques 14 de la chaîne de diffusion correspondante sont modifiés pour être associés aux cartes de programmes suivantes de la chaîne de diffusion correspondante.

Si une carte de programme fournie par le serveur distant 2 ne comporte pas certaines informations, alors l'élément graphique 14 associé à ladite carte de programme indique un message d'information manquante. Si l'information manquante est relative à l'heure de début de diffusion du programme associé à la carte de programme, alors l'heure de début de diffusion associé à la carte incomplète est définie comme étant l'heure de fin de la carte de programme précédente de la chaîne de diffusion lorsqu'une telle heure de fin de diffusion est disponible. Si aucune information n'est fournie pour une chaîne, une seule carte de programme sans heure de début sera affichée dans la colonne correspondant à la chaîne de diffusion et l'utilisateur ne pourra pas naviguer le long de l'axe des ordonnées sur cette chaîne De même, l'heure de fin de programme peut être définie comme étant l'heure de début de diffusion du prochain programme connu.

Dans un mode de réalisation non illustré, l'axe des abscisses et l'axe des ordonnées de ce tableau sont permutés. En d'autres termes, l'axe des ordonnées représente les différentes chaînes de diffusion de la série de chaînes de diffusion et l'axe des abscisses représente un axe temporel. Ainsi, la première colonne du tableau comporte pour chaque chaîne de diffusion une case illustrant un descriptif pour ladite chaine. En outre, chaque ligne du tableau comporte une pluralité d'éléments graphiques situés le long de l'axe temporel, chaque élément graphique étant associé à une carte de programme respective de la chaine de diffusion correspondante.

Certains des éléments représentés, notamment les composants du boîtier d'accès et du module de commande, peuvent être réalisés sous différentes formes, de manière unitaire ou distribuée, au moyen de composants matériels et/ou logiciels. Des composants matériels utilisables sont les circuits intégrés spécifiques ASIC, les réseaux logiques programmables FPGA ou les microprocesseurs. Des composants logiciels peuvent être écrits dans différents langages de programmation, par exemple HTML, C, C++, Java ou VHDL. Cette liste n'est pas exhaustive.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Procédé de génération d'une interface graphique représentant un guide des programmes comportant :
- Générer une interface graphique (12) comportant une pluralité de séries de cartes de programmes, chaque série de cartes de programmes étant associée à une chaîne de diffusion respective, chaque carte de programme représentant un programme à diffuser par ladite chaîne de diffusion associée, chaque carte de programme étant associée à une pluralité d'attributs de programme incluant un instant de début de programme (23) et un descripteur de programme, chaque carte de programme comportant une zone d'information (14, 15, 16) dans laquelle le descripteur de programme est affiché, les cartes de programme d'une série étant positionnées par ordre chronologique le long d'un premier axe de l'interface graphique, la pluralité de séries étant positionné le long d'un deuxième axe de l'interface graphique, les cartes de programmes desdites séries étant positionnées sous la forme d'une pluralité d'alignements parallèles au deuxième axe, les cartes de programmes qui appartiennent à un même alignement ayant une dimension égale le long du premier axe,
- Sélectionner une carte de programme en tant que carte active (18),
- Fixer un paramètre d'instant de diffusion cible,
- Positionner dans l'alignement auquel appartient la carte active les cartes de programmes qui, d'une part, appartiennent à des séries de cartes de programmes autres que la série à laquelle appartient la carte active et, d'autre part, qui représentent des programmes en cours de diffusion à l'instant représenté par le paramètre d'instant de diffusion cible, de sorte que l'interface graphique générée comporte lesdites cartes de programmes positionnées de cette manière
**caractérisé en ce que** le procédé comporte en outre :
- déterminer un instant présent,
- comparer l'instant présent à l'instant de début de programme attribué à la carte active (19),
et **en ce que** l'étape de fixer le paramètre d'instant de diffusion cible comporte en outre fixer le paramètre d'instant de diffusion cible égal à l'instant présent en réponse à la détection que l'instant présent est postérieur à l'instant de début de programme attribué à la carte active, et égal à l'instant de début de programme attribué à la carte active en réponse à la détection que l'instant présent est antérieur à l'instant de début de programme attribué à la carte active.

2. Procédé de génération d'une interface graphique selon la revendication 1, comportant en outre :
- Recevoir une commande de navigation (17) présentant une direction de navigation le long du premier axe dans l'interface graphique,
- Modifier la sélection de la carte active pour sélectionner en tant que carte active une carte de programme positionnée dans la direction de navigation par rapport à la carte de programme précédemment sélectionnée.

3. Procédé de génération d'une interface graphique selon la revendication 2, dans lequel l'étape de modification de la sélection de la carte active est exécutée en réponse à l'expiration d'un compteur de temps, le procédé comportant en outre
- Réinitialiser le compteur de temps à une durée positive déterminée à chaque réception de commande de navigation.

4. Procédé de génération d'une interface graphique selon la revendication 1, comportant en outre :
- Recevoir une commande d'accès direct désignant une carte de programme dans l'interface graphique,
- Modifier la sélection de la carte active pour sélectionner en tant que carte active la carte de programme désignée par la commande d'accès direct.

5. Procédé de génération d'une interface graphique selon l'une des revendications 2 à 4, dans lequel l'interface graphique comporte en outre un pointeur (16) de la carte active positionné sur la carte active dans l'interface graphique.

6. Procédé de génération d'une interface graphique selon l'une des revendications 1 à 5, dans lequel les cartes de programmes qui appartiennent à une même série ont une dimension égale le long du second axe.

7. Procédé de génération d'une interface graphique selon l'une des revendications 1 à 6, dans lequel toutes les cartes de programmes ont une dimension égale le long du second axe.

8. Procédé de génération d'une interface graphique selon l'une des revendications 1 à 7, dans lequel la carte active (15) et les cartes de programme (15) positionnées dans l'alignement auquel appartient la carte active présentent une dimension le long du premier axe plus grande que les autres cartes de programme.

9. Procédé de génération d'une interface graphique selon l'une des revendications 1 à 8, dans lequel la pluralité d'attributs de programme de chaque carte de programme inclut un instant de fin de programme, et dans lequel l'étape de positionner dans l'alignement auquel appartient la carte active les cartes de programmes des séries de cartes de programmes autres que la série à laquelle appartient la carte active comporte, pour chaque série de cartes de programmes autre que la série à laquelle appartient la carte active, une étape de sélection d'une carte de programme présentant un instant de début de programme antérieur à l'instant de diffusion cible et un instant de fin de programme postérieur à l'instant de diffusion cible.

10. Procédé de génération d'une interface graphique selon l'une des revendications 1 à 8, dans lequel la pluralité d'attributs de programme de chaque carte de programme inclut une durée de programme, l'étape de positionner dans l'alignement auquel appartient la carte active les cartes de programmes des séries de cartes de programmes autres que la série à laquelle appartient la carte active comporte, pour chaque série de cartes de programmes autre que la série à laquelle appartient la carte active, une étape de sélection d'une carte de programme présentant un instant de début de programme antérieur à l'instant de diffusion cible et une durée de programme supérieure à un temps restant entre l'instant de début de diffusion de ladite carte de programme et l'instant de diffusion cible.

11. Procédé de génération d'une interface graphique selon l'une des revendications 1 à 10, dans lequel la pluralité de séries de cartes de programmes est positionnée le long d'un deuxième axe de l'interface graphique de manière cyclique.

12. Procédé de génération d'une interface graphique selon l'une des revendications 1 à 11, dans lequel l'interface graphique comporte un nombre impair de séries de cartes de programmes, la série à laquelle appartient la carte active étant centrée parmi les séries de cartes de programme de l'interface graphique.

13. Procédé de génération d'une interface graphique selon l'une des revendications 1 à 12, comportant en outre recevoir une commande d'instant de diffusion désignant un instant prédéterminé, modifier l'instant de diffusion cible pour définir en tant qu'instant de diffusion cible l'instant de début de diffusion de la carte de programme d'une part appartenant à la série incluant la carte active et, d'autre part, représentant un programme en cours de diffusion à l'instant prédéterminé désigné par la commande d'instant de diffusion.

14. Dispositif de génération d'une interface graphique (3) comportant un module de commande (10) configuré pour
- Générer une interface graphique (12) comportant une pluralité de séries de cartes de programmes, chaque série de cartes de programmes étant associée à une chaîne de diffusion respective, chaque carte de programme représentant un programme à diffuser par ladite chaîne de diffusion associée, chaque carte de programme étant associée à une pluralité d'attributs de programme incluant un instant de début de programme (23) et un descripteur de programme, chaque carte de programme comportant une zone d'information (14, 15, 16) dans laquelle le descripteur de programme est affiché, les cartes de programme d'une série étant positionnées par ordre chronologique le long d'un premier axe de l'interface graphique, la pluralité de séries étant positionné le long d'un deuxième axe de l'interface graphique, les cartes de programmes desdites séries étant positionnées sous la forme d'une pluralité d'alignements parallèles au deuxième axe, les cartes de programmes qui appartiennent à un même alignement ayant une dimension égale le long du premier axe,
- Sélectionner une carte de programme en tant que carte active (18),
- déterminer un instant présent,
- comparer l'instant présent à l'instant de début de programme attribué à la carte active (19),
- Fixer un paramètre d'instant de diffusion cible égal à l'instant présent en réponse à la détection que l'instant présent est postérieur à l'instant de début de programme attribué à la carte active, et égal à l'instant de début de programme attribué à la carte active en réponse à la détection que l'instant présent est antérieur à l'instant de début de programme attribué à la carte active,
- Positionner dans l'alignement auquel appartient la carte active les cartes de programmes qui, d'une part, appartiennent à des séries de cartes de programmes autres que la série à laquelle appartient la carte active et, d'autre part, qui représentent des programmes en cours de diffusion à l'instant représenté par le paramètre d'instant de diffusion cible, de sorte que l'interface graphique générée comporte lesdites cartes de programmes positionnées de cette manière.

## Patentansprüche

1. Verfahren zur Erzeugung einer grafischen Benutzeroberfläche, die einen Programmführer darstellt, umfassend:
- das Generieren einer grafischen Benutzeroberfläche (12) mit einer Vielzahl von Programmkartenserien, wobei jede Programmkartenserie einem jeweiligen Sendekanal zugeordnet ist, wobei jede Programmkarte ein auf dem zugeordneten Sendekanal zu sendendes Programm darstellt, wobei jede Programmkarte einer Vielzahl von Programmattributen einschließlich einer Programmanfangszeit (23) und einer Programmbeschreibung zugeordnet ist, wobei jede Programmkarte einen Informationsbereich (14, 15, 16) hat, in welchem die Programmbeschreibung angezeigt wird, wobei die Programmkarten einer Serie in chronologischer Reihenfolge entlang einer ersten Achse der grafischen Benutzeroberfläche positioniert sind, wobei die Vielzahl von Serien entlang einer zweiten Achse der Benutzeroberfläche positioniert ist, wobei die Programmkarten dieser Serien in Form einer Vielzahl von Reihen parallel zur zweiten Achse positioniert sind, wobei die Programmkarten, die zur gleichen Reihe gehören, entlang der ersten Achse gleich groß sind,
- das Wählen einer Programmkarte als aktive Karte (18),
- das Festlegen eines Ziel-Sendezeitpunktparameters,
- in der Reihe, zu welcher die aktive Karte gehört, das Positionieren der Programmkarten, die einerseits zu anderen Programmkartenserien als der Serie gehören, zu welcher die aktive Karte gehört, und die andererseits Programme angeben, die zu dem durch den Ziel-Sendezeitpunktparameter angegebenen Zeitpunkt gerade ausgestrahlt werden, derart, dass die generierte grafische Benutzeroberfläche die solchermaßen positionierten Programmkarten enthält,
**dadurch gekennzeichnet, dass** das Verfahren ferner umfasst:
- das Bestimmen eines gegenwärtigen Zeitpunkts,
- das Vergleichen des gegenwärtigen Zeitpunkts mit dem der aktiven Karte (19) zugeordneten Zeitpunkt des Programmbeginns,
und dadurch, dass der Schritt des Festlegens des Ziel-Sendezeitpunktparameters ferner das Festlegen des Ziel-Sendezeitpunktparameters umfasst, der gleich dem gegenwärtigen Zeitpunkt ist, in Reaktion auf den Nachweis, dass der gegenwärtige Zeitpunkt später als der der aktiven Karte zugeordnete Zeitpunkt des Programmbeginns ist, und der gleich dem der aktiven Karte zugeordneten Zeitpunkt des Programmbeginns ist, in Reaktion auf den Nachweis, dass der gegenwärtige Zeitpunkt früher als der der aktiven Karte zugeordnete Zeitpunkt des Programmbeginns ist.

2. Verfahren zur Erzeugung einer grafischen Benutzeroberfläche nach Anspruch 1, ferner umfassend:
- das Empfangen eines Navigationsbefehls (17), der in der graphischen Benutzeroberfläche eine Navigationsrichtung entlang der ersten Achse angibt,
- das Ändern der Auswahl der aktiven Karte, um als aktive Karte eine Programmkarte zu wählen, die bezüglich der vorher ausgewählten Programmkarte in der Navigationsrichtung angeordnet ist.

3. Verfahren zur Erzeugung einer grafischen Benutzeroberfläche nach Anspruch 2, in welchem der Schritt des Änderns der Auswahl der aktiven Karte in Reaktion auf das Ablaufen eines Zeitzählers durchgeführt wird, wobei das Verfahren ferner umfasst:
- das erneute Initialisieren des Zeitzählers mit einer bestimmten positiven Dauer bei jedem Empfang des Navigationsbefehls.

4. Verfahren zur Erzeugung einer grafischen Benutzeroberfläche nach Anspruch 1, ferner umfassend:
- das Empfangen eines Direktzugriffsbefehls, der eine Programmkarte in der Benutzeroberfläche benennt,
- das Ändern der Auswahl der aktiven Karte, um als aktive Karte die durch den Direktzugriffsbefehl benannte Programmkarte zu wählen.

5. Verfahren zur Erzeugung einer grafischen Benutzeroberfläche nach einem der Ansprüche 2 bis 4, in welchem die grafische Benutzeroberfläche ferner einen Zeiger (16) der aktiven Karte aufweist, der an der aktiven Karte in der grafischen Benutzeroberfläche positioniert ist.

6. Verfahren zur Erzeugung einer grafischen Benutzeroberfläche nach einem der Ansprüche 1 bis 5, in welchem die Programmkarten, die zur gleichen Serie gehören, entlang der zweiten Achse gleich groß sind.

7. Verfahren zur Erzeugung einer grafischen Benutzeroberfläche nach einem der Ansprüche 1 bis 6, in welchem alle Programmkarten entlang der zweiten Achse gleich groß sind.

8. Verfahren zur Erzeugung einer grafischen Benutzeroberfläche nach einem der Ansprüche 1 bis 7, in welchem die aktive Karte (15) und die Programmkarten (15), die in der Reihe angeordnet sind, zu der die aktive Karte gehört, entlang der ersten Achse größer sind als die anderen Programmkarten.

9. Verfahren zur Erzeugung einer grafischen Benutzeroberfläche nach einem der Ansprüche 1 bis 8, in welchem die Vielzahl von Programmattributen jeder Programmkarte einen Zeitpunkt des Programmendes enthält und in welchem der Schritt, in welchem in der Reihe, zu welcher die aktive Karte gehört, die Programmkarten der Programmkartenserien positioniert werden, mit Ausnahme der Serie, zu welcher die aktive Programmkarte gehört, für jede Programmkartenserie außer der Serie, zu welcher die aktive Karte gehört, einen Schritt des Auswählens einer Programmkarte umfasst, die einen Anfangszeitpunkt des Programms angibt, der vor dem Ziel-Sendezeitpunkt liegt, und einen Endzeitpunkt des Programms, der nach dem Ziel-Sendezeitpunkt liegt.

10. Verfahren zur Erzeugung einer grafischen Benutzeroberfläche nach einem der Ansprüche 1 bis 8, in welchem die Vielzahl von Programmattributen jeder Programmkarte eine Programmdauer enthält, wobei der Schritt, in welchem in der Reihe, zu welcher die aktive Karte gehört, die Programmkarten der Programmkartenserien positioniert werden, mit Ausnahme der Serie, zu welcher die aktive Karte gehört, für jede Programmkartenserie außer der Serie, zu welcher die aktive Karte gehört, einen Schritt des Auswählens einer Programmkarte umfasst, die einen Anfangszeitpunkt des Programms angibt, der vor dem Ziel-Sendezeitpunkt liegt, und eine Programmdauer, die länger ist als eine Zeit, die zwischen dem Zeitpunkt des Sendebeginns dieser Programmkarte und dem Ziel-Sendezeitpunkt verbleibt.

11. Verfahren zur Erzeugung einer Benutzeroberfläche nach einem der Ansprüche 1 bis 10, in welchem die Vielzahl von Programmkartenserien entlang einer zweiten Achse der grafischen Benutzeroberfläche zylinderförmig positioniert wird.

12. Verfahren zur Erzeugung einer Benutzeroberfläche nach einem der Ansprüche 1 bis 11, in welchem die grafische Benutzeroberfläche eine ungerade Zahl von Programmkartenserien aufweist, wobei die Serie, zu welcher die aktive Karte gehört, zwischen den Programmkartenserien der grafischen Benutzeroberfläche zentriert ist.

13. Verfahren zur Erzeugung einer Benutzeroberfläche nach einem der Ansprüche 1 bis 12, ferner umfassend das Empfangen einen Sendezeitpunkt-Befehl, der einen vorgegebenen Zeitpunkt benennt, das Ändern des Ziel-Sendezeitpunkts der Programmkarte, die einerseits zu der Serie gehört, welche die aktive Karte enthält, und die andererseits ein Programm angibt, welches zu dem vorgegebenen, durch den Sendezeitpunkt-Befehl benannten Zeitpunkt gerade ausgestrahlt wird.

14. Vorrichtung zur Erzeugung einer grafischen Benutzeroberfläche (3), umfassend ein Steuermodul (10), das konfiguriert ist für
- das Generieren einer grafischen Benutzeroberfläche (12) mit einer Vielzahl von Programmkartenserien, wobei jede Programmkartenserie einem jeweiligen Sendekanal zugeordnet ist, wobei jede Programmkarte ein auf dem zugeordneten Sendekanal zu sendendes Programm darstellt, wobei jede Programmkarte einer Vielzahl von Programmattributen einschließlich einer Programmanfangszeit (23) und einer Programmbeschreibung zugeordnet ist, wobei jede Programmkarte einen Informationsbereich (14, 15, 16) hat, in welchem die Programmbeschreibung angezeigt wird, wobei die Programmkarten einer Serie in chronologischer Reihenfolge entlang einer ersten Achse der grafischen Benutzeroberfläche positioniert sind, wobei die Vielzahl von Serien entlang einer zweiten Achse der Benutzeroberfläche positioniert ist, wobei die Programmkarten dieser Serien in Form einer Vielzahl von Reihen parallel zur zweiten Achse positioniert sind, wobei die Programmkarten, die zur gleichen Reihe gehören, entlang der ersten Achse gleich groß sind,
- das Wählen einer Programmkarte als aktive Karte (18),
- das Bestimmen eines gegenwärtigen Zeitpunkts,
- das Vergleichen des gegenwärtigen Zeitpunkts mit dem der aktiven Karte (19) zugeordneten Zeitpunkt des Programmbeginns,
- das Festlegen eines Ziel-Sendezeitpunktparameters, der gleich dem gegenwärtigen Zeitpunkt ist, in Reaktion auf den Nachweis, dass der gegenwärtige Zeitpunkt später als der der aktiven Karte zugeordnete Zeitpunkt des Programmbeginns ist, und der gleich dem der aktiven Karte zugeordneten Zeitpunkt des Programmbeginns ist, in Reaktion auf den Nachweis, dass der gegenwärtige Zeitpunkt früher als der der aktiven Karte zugeordnete Zeitpunkt des Programmbeginns ist,
- in der Reihe, zu welcher die aktive Karte gehört, das Positionieren der Programmkarten, die einerseits zu anderen Programmkartenserien als der Serie gehören, zu welcher die aktive Karte gehört, und die andererseits Programme angeben, die zu dem durch den Ziel-Sendezeitpunktparameter angegebenen Zeitpunkt gerade ausgestrahlt werden, derart, dass die generierte grafische Benutzeroberfläche die solchermaßen positionierten Programmkarten enthält.

## Claims

1. Method for generating a graphical interface representing a program guide which comprises the follow:
- Generate a graphical interface (12) comprising a plurality of series of program cards, each series of program cards being associated with a respective broadcast channel, each program card representing a program to be broadcast by said associated broadcast channel, each program card being associated with a plurality of program attributes including a program start time (23) and a program descriptor, each program card comprising an information area (14, 15, 16) in which the program descriptor is displayed, the program cards of a series being positioned in chronological order along a first axis of the graphical interface, the plurality of series being positioned along a second axis of the graphical interface, the program cards of said series being positioned in the form of a plurality of alignments parallel to the second axis, the program cards which belong to a given alignment having an equal dimension along the first axis,
- Select a program card as the active card (18),
- Set a target broadcast time parameter,
- Position in the alignment to which the active card belongs the program cards which, firstly, belong to program card series other than the series to which the active card belongs and which, secondly, represent programs being broadcast at the time represented by the target broadcast time parameter, so that the graphical interface generated comprises said program cards positioned in this way
**characterised in that** the method also comprises:
- determine a present time,
- compare the present time with the program start time assigned to the active card (19),
and **in that** the step of setting the target broadcast time parameter also comprises setting the target broadcast time parameter equal to the present time in response to the detection that the present time is later than the program start time assigned to the active board, and equal to the program start time assigned to the active board in response to the detection that the present time is earlier than the program start time assigned to the active board.

2. Method for generating a graphical interface according to claim 1, further comprising:
- Receive a navigation command (17) presenting a direction of navigation along the first axis in the graphical interface,
- Modify the selection of the active card to select as the active card a program card positioned in the direction of navigation with respect to the program card previously selected.

3. Method for generating a graphical interface according to claim 2, in which the step of modification of the selection of the active card is performed in response to the expiry of a timer, the method further comprising:
- Reset the time counter to a positive duration determined on each reception of a navigation command.

4. Method for generating a graphical interface according to claim 1, further comprising:
- Receive a direct access command designating a program card in the graphical interface,
- Modify the selection of the active card to select as the active card the program card designated by the direct access command.

5. Method for generating a graphical interface according to one of claims 2 to 4, in which the graphical interface further comprises an active card pointer (16) positioned on the active card in the graphical interface.

6. Method for generating a graphical interface according to one of claims 1 to 5, in which the program cards which belong to a given series have an equal dimension along the second axis.

7. Method for generating a graphical interface according to one of claims 1 to 6, in which all the program cards have an equal dimension along the second axis.

8. Method for generating a graphical interface according to one of claims 1 to 7, in which the active card (15) and the program cards (15) positioned in the alignment to which the active card belongs present a greater dimension along the first axis than the other program cards.

9. Method for generating a graphical interface according to one of claims 1 to 8, in which the plurality of program attributes of each program card includes a program end time, and in which the step of positioning the program cards of the program card series other than the series to which the active card belongs in the alignment to which the active card belongs comprises, for each series of program cards other than the series to which the active card belongs, a step of selection of a program card presenting a program start time earlier than the target broadcast time and a program end time later than the target broadcast time.

10. Method for generating a graphical interface according to one of claims 1 to 8, in which the plurality of program attributes of each program card includes a program duration, and the step of positioning the program cards of the program card series other than the series to which the active card belongs in the alignment to which the active card belongs comprises, for each series of program cards other than the series to which the active card belongs, a step of selection of a program card presenting a program start time earlier than the target broadcast time and a program duration greater than a time remaining between the broadcast start time of said program card and the target broadcast time.

11. Method for generating a graphical interface according to one of claims 1 to 10, in which the plurality of program card series is positioned along a second axis of the graphical interface in a cyclical way.

12. Method for generating a graphical interface according to one of claims 1 to 11, in which the graphical interface comprises an odd number of program card series, the series to which the active card belongs being centred among the program card series of the graphical interface.

13. Method for generating a graphical interface according to one of claims 1 to 12, further comprising: receive a broadcast time command designating a predetermined time; modify the target broadcast time to define as the target broadcast time the broadcast start time of the program card firstly belonging to the series including the active card and secondly representing a program being broadcast at the predetermined time designated by the broadcast time command.

14. Method for generating a graphical interface (3) comprising a control module (10) configured to
- Generate a graphical interface (12) comprising a plurality of series of program cards, each series of program cards being associated with a respective broadcast channel, each program card representing a program to be broadcast by said associated broadcast channel, each program card being associated with a plurality of program attributes including a program start time (23) and a program descriptor, each program card comprising an information area (14, 15, 16) in which the program descriptor is displayed, the program cards of a series being positioned in chronological order along a first axis of the graphical interface, the plurality of series being positioned along a second axis of the graphical interface, the program cards of said series being positioned in the form of a plurality of alignments parallel to the second axis, the program cards which belong to a given alignment having an equal dimension along the first axis,
- Select a program card as the active card (18),
- determine a present time,
- compare the present time with the program start time assigned to the active card (19),
- Set a target broadcast time parameter equal to the present time in response to the detection that the present time is later than the program start time assigned to the active board, and equal to the program start time assigned to the active board in response to the detection that the present time is earlier than the program start time assigned to the active board,
- Position in the alignment to which the active card belongs the program cards which, firstly, belong to program card series other than the series to which the active card belongs and which, secondly, represent programs being broadcast at the time represented by the target broadcast time parameter, so that the graphical interface generated comprises said program cards positioned in this way.
